# EUROPEAN PATENT APPLICATION

(11) **EP 2 706 818 A2**
(43) Date of publication of application: **12.03.2014**
(21) Application number: 12191904.7
(22) Date of filing: 09.11.2012
(51) Int. Cl.: H05B 33/08, H05B 37/02

(54) **Wirelessly controllable LED bulb and wireless control method thereof**

(30) Priority: 07.09.2012 TW 101132789
(71) Applicant: Phihong Technology Co., Ltd., Gueishan Township T'ao yuan 333 (TW)
(72) Inventor: Chen, Chun-Chen, Taoyuan County 333 (TW); Ku, Hsiao-Tung, Taoyuan County 333 (TW)
(74) Representative: Zaboliene, Reda

(57) **Abstract**

A wirelessly controllable light emitting diode (LED) bulb includes a plurality of LED chips to provide a light source; a wireless control module to receive a wireless signal and control ON/OFF status of the plurality of LED chips and brightness of the light source; a sleeve enclosing the wireless control module to protect the wireless control module; a driving unit to provide power needed by the plurality of LED chips according to an input power source; a threaded base portion to receive the input power source and fasten the LED bulb to a lamp holder; a base plate to carry the plurality of LED chips; and an outer bulb shell enclosing the sleeve, the plurality of LED chips and the base plate to transmit the light source and protect the sleeve, the wireless control module, the plurality of LED chips and the base plate.

## Description

### FIELD OF THE INVENTION

The present invention relates to a wirelessly controllable LED bulb and a wireless control method thereof, and more particularly to a LED bulb whose ON/OFF status and brightness may be controlled through wireless transmission and a wireless control method thereof.

### BACKGROUND OF THE INVENTION

Light emitting diode(hereinafter referred to as LED) light sources have advantages of lightness and thinness, power saving, quick response and long lifetime, and illuminating products with the LED light sources utilized as the light sources thereof are increasingly widespread as the brightness of the LED light sources enhance. For instance, information products, communication products, consumer electronics, vehicles, traffic signals, advertisement boards and general illuminators all include LED light sources applications.

In other respects, in comparison with general incandescent tungsten light bulbs, LED bulbs have advantages of small size, quick response, low heat emission, low power consumption, long lifetime, planar packaging, no heat radiation, low pollution and high anti-vibration, such that the incandescent tungsten light bulbs are replaced by the LED light bulbs gradually. However, the ON/OFF status and the brightness of the conventional LED bulbs are controlled through wired control. Therefore, the cost of hardwire must raise in order to control the ON/OFF status or the brightness of the conventional LED bulbs, resulting in the increase of the cost of hardwire construction and the inconvenience of usage.

### SUMMARY OF THE INVENTION

Accordingly, the main object of the present invention is to provide a wirelessly controllable LED bulb and a wireless control method thereof to receive wireless control signals and control the ON/OFF status and the brightness of the LED bulbs according to the wireless control signals, so as to conveniently control the ON/OFF status and the brightness of light bulbs and save the cost of hardware.

The present invention discloses a wirelessly controllable LED bulb including a plurality of LED chips to provide a light source; a wireless control module to receive a wireless control signal and control ON/OFF status of the plurality of LED chips or adjust brightness of the light source according to the wireless control signal; a sleeve enclosing the wireless control module to protect the wireless control module; a driving unit to provide power needed by the plurality of LED chips based on an input power source; a threaded base portion to receive the input power source and fasten the LED bulb to a lamp holder; a base plate to carry the plurality of LED chips, wherein the base plate is electrically connected to the wireless control module and the driving unit; and a bulb shell enclosing the sleeve, the plurality of LED chips and the base plate to transmit the light source and protect the sleeve, the wireless control module, the plurality of LED chips and the base plate.

The present invention further discloses a method for wirelessly controlling a light emitting diode (LED) bulb, the LED bulb including a wireless control module and a driving unit, the method including: receiving a wireless control signal emitted from a wireless transmitter and controlling the driving unit according to the wireless control signal by the wireless control module; and adjusting ON/OFF status and brightness of the LED bulb by the driving unit.

### BRIEF DESCRIPTION OF THE DRAWINGS

Fig. 1 is an exploded diagram of a light emitting diode bulb in accordance with one embodiment of the present invention;
Fig. 2 is a side view of a LED bulb body in accordance with one embodiment of the present invention;
Fig. 3 is an external side view of the LED bulb in Fig. 1;
Fig. 4 is a top view of the LED bulb body in Fig. 2; and
Fig. 5 is a diagram of a wireless control process in accordance with one embodiment of the present invention.

### DETAILED DESCRIPTION OF THE PREFERRED EMBODIMENT

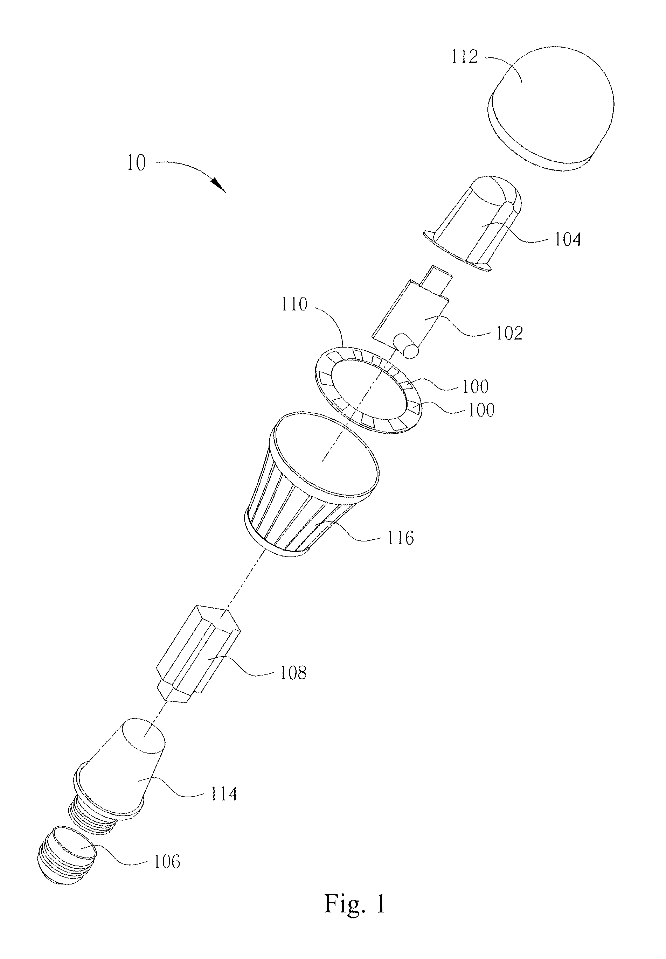

Please refer to Fig. 1, which is an exploded diagram of a light emitting diode (hereinafter referred to as LED) bulb 10 in accordance with one embodiment of the present invention. The LED bulb 10 includes a plurality of LED chips 100, a wireless control module 102, a sleeve 104, a threaded base portion 106, a driving unit 108, a base plate 110, a bulb shell 112, a cylindrical base 114 and a heat sink 116. The LED chips 100 are a light generating component of the LED bulb 10. The wireless control module 102 is employed to receive wireless control signals and control the ON/OFF status of the LED chips 100 or adjust the brightness of the light generated by the LED chips 100 according to the wireless control signals. The sleeve 104 encloses the wireless control module 102 to protect the wireless control module 102. The threaded base portion 106 is utilized to receive an input power source, so as to conduct the input power source to the driving unit 108. Furthermore, the LED bulb 10 may be fastened to a lamp holder through the threaded base portion 106. The driving unit 108 is employed to provide the power source needed by the LED chips 100 for light emission according to the input power source. The base plate 110 is utilized to carry the LED chips 100 and is electrically connected to the wireless control module 102 and the driving unit 108, such that the driving unit 108 may conduct the power source to the base plate 110 so as to render the LED chips 100 to receive power and emit light, and the brightness or the ON/OFF status of the LED chips 100 may be adjusted through the wireless control module 102. The base plate 110 may be composed of an electrically conductive metal. In one embodiment of the present invention, the base plate 110 made of aluminum alloy may have better performance, but the material of the base plate 110 is not limited to aluminum alloy. The bulb shell 112 may be a spherical shell and is utilized to transmit the light emitted by the LED chips 100 and enclose the sleeve 104, the LED chips 100 and the base plate 110 to protect the sleeve 104, the wireless control module 102, the LED chips 100 and the base plate 110 and prevent the LED chips 100 from reducing the light emitting performance because of the influence of the air. The bulb shell 112 may be composed of transparent material or opaque material based on the manufacturing demand for the LED bulb 10. The cylindrical base 114 is connected to the upper end of the threaded base portion 106 to protect the driving unit 108 and for insulation. The cylindrical base 114 may include an insulating material to prevent from generating unnecessary conducting paths, and the insulating material may include but be not limited to plastic material. The heat sink 116 is connected to the cylindrical base 114 and the bulb shell 112 to dissipate heat and protect the driving unit 108. The outer surface of the heat sink 116 may include a plurality of heat sink fins to enhance the surface area of the heat sink and speed up heat dissipation.

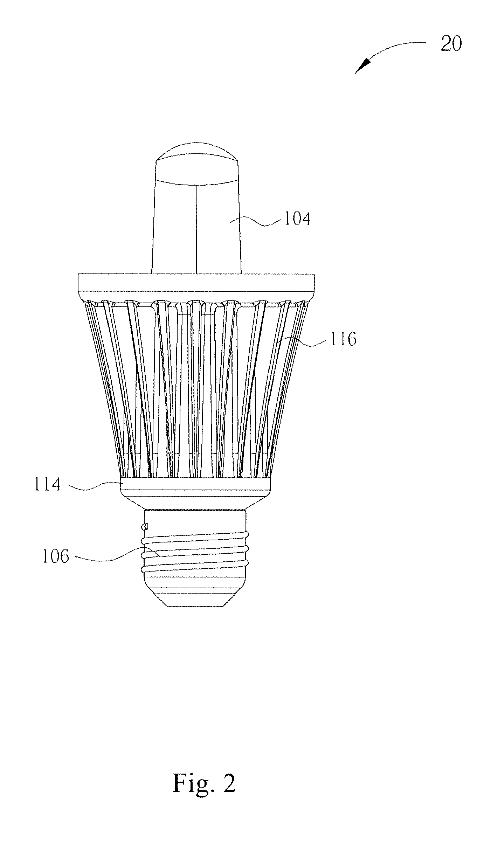

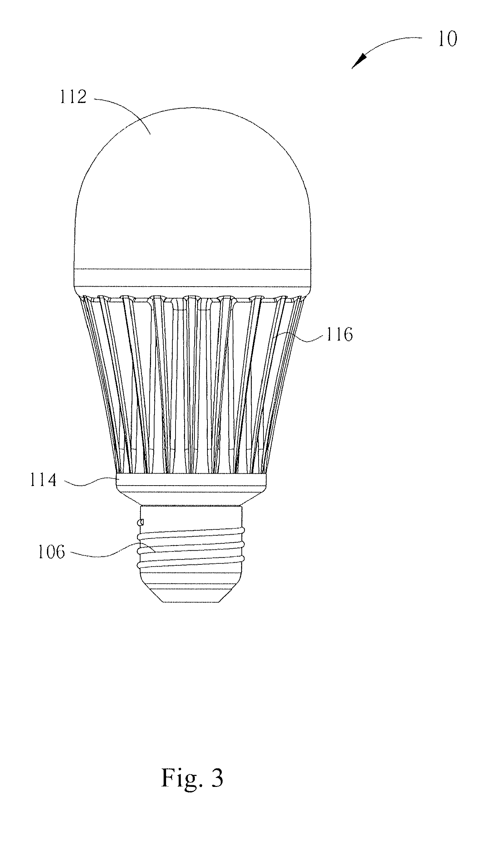

Please refer to Fig. 2, which is a side view of a LED bulb body 20 in accordance with one embodiment of the present invention. The LED bulb body 20 is formed by various elements in Fig. 1 except the bulb shell 112. In external appearance, the LED bulb body 20 mainly includes the sleeve 104, the threaded base portion 106, the cylindrical base 114 and the heat sink 116 while the LED chips 100, the wireless control module 102, the driving unit 108 and the base plate 110 are all formed inside the LED bulb body 20 and are protected. After the various elements except the bulb shell 112 are assembled, the LED bulb body 20 is completed and may act as a light emitting device. Finally, after the bulb shell 112 assembles with the heat sink 116, the LED bulb 10 of the present invention is completed as shown in Fig. 3.

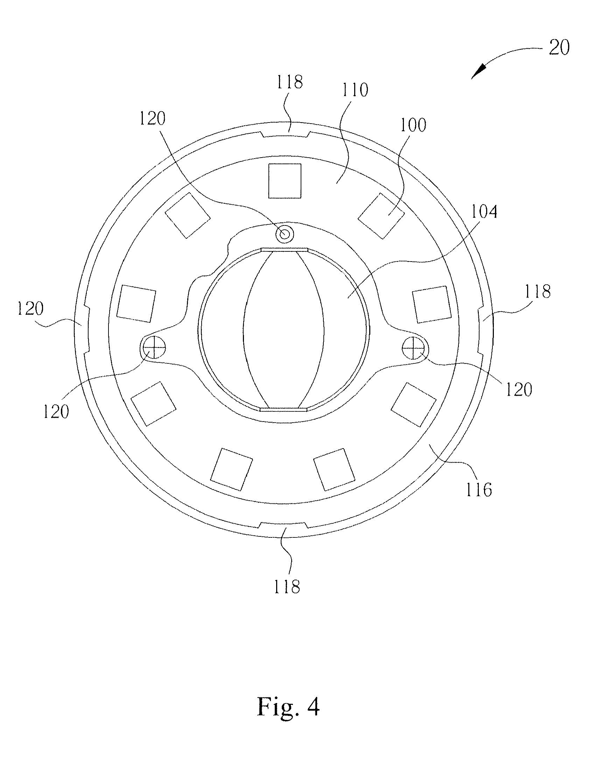

Please further refer to Fig. 4, which is a top view of the LED bulb body 20 in Fig. 2. It can be seen in Fig. 4 that the LED chips 100 are evenly distributed on the base plate 110. The base plate 110 is fastened above the heat sink 116 through fastening elements 120, and the cylindrical base 114 is fixed below and partially inside the heat sink 116 through the fastening elements 120. Moreover, locking devices 118 are utilized to fix the bulb shell 112 onto the heat sink 116, such that the various elements of the LED bulb 10 may be fastened to prevent part of elements from falling o ff.

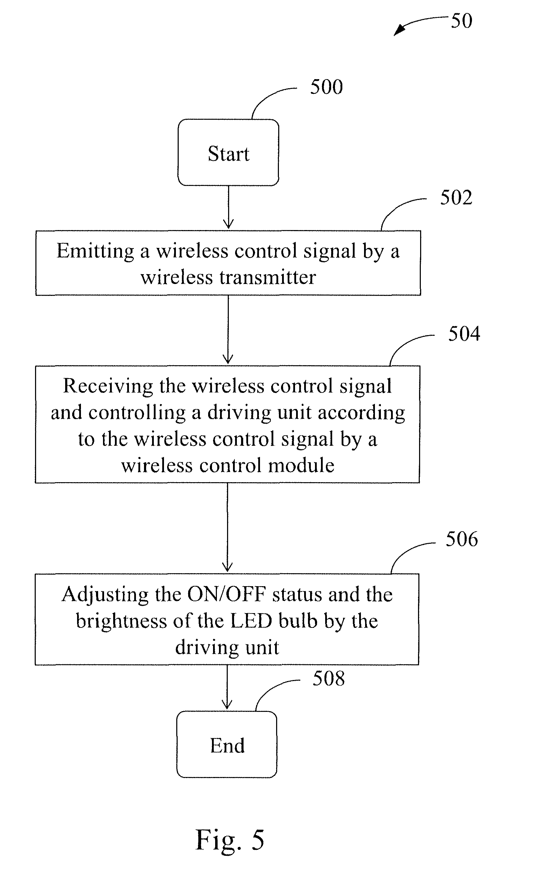

Please refer to Fig. 5, which is a diagram of a wireless control process 50 in accordance with one embodiment of the present invention. The wireless control process 50 is employed to control the ON/OFF status and the brightness of a LED bulb and may include the following steps:
Step 500: Start;
Step 502: A wireless transmitter emits a wireless control signal;
Step 504: A wireless control module receives the wireless control signal and controls a driving unit according to the wireless control signal;
Step 506: The driving unit adjusts the ON/OFF status and the brightness of the LED bulb; and
Step 508: End.

According the process 50, when the user wants to switch on or switch off the LED bulb 10 or adjust the brightness of the LED bulb 10, the user may utilize the wireless transmitter to emit wireless control signals to the LED bulb 10. The wireless transmitter may be any kinds of transmitters which can emit wireless control signals, such as remote controllers or smart phones. The wireless transmitter may emit corresponding wireless control signals based on different demands, for instance switching on the LED bulb 10, switching off the LED bulb 10, or adjusting brightness of the LED bulb 10 lighter or darker. The adjustment of the ON/OFF status and the brightness of the LED bulb 10 may be performed through different means. For example, the driving unit 108 may include a variable resistor. When the wireless control signals are employed to decrease the brightness of the LED bulb 10, the wireless control module may adjust the resistance value of the variable resistor larger. When the wireless control signals are utilized to increase the brightness of the LED bulb 10, the wireless control module may adjust the resistance value of the variable resistor smaller. The performing means for the adjustment of the ON/OFF status and the brightness of the LED bulb are well known to the person having ordinary skill in the art and thus are omitted herein.

Based on the foregoing description, the LED bulb of the present invention may receive wireless control signals and control the ON/OFF status and the brightness thereof according to the wireless control signals, so as to conveniently control the ON/OFF status and the brightness of the bulb and save the cost for hardwire construction.

The foregoing description is only a preferred embodiment of the present invention. It should be appreciated that numerous alterations and modifications may be practiced by those skilled in the art without departing from the scope of the invention. It is intended that such equivalent modifications and alterations are included insofar as they come within the scope of the invention as claimed or the equivalents thereof.

## Claims

1. A wirelessly controllable light emitting diode (LED) bulb (10), said LED bulb (10) **characterized by** comprising:
a plurality of LED chips (100) to provide a light source;
a wireless control module (102) to receive a wireless control signal and control ON/OFF status of said plurality of LED chips (100) or adjust brightness of said light source according to said wireless control signal;
a sleeve (104) enclosing said wireless control module (102) to protect said wireless control module (102);
a driving unit (108) to provide power needed by said plurality of LED chips (100) based on an input power source;
a threaded base portion (106) to receive said input power source and fasten said LED bulb (10) to a lamp holder;
a base plate (110) to carry said plurality of LED chips (100), wherein said base plate (110) is electrically connected to said wireless control module (102) and said driving unit (108); and
a bulb shell (112) enclosing said sleeve (104), said plurality of LED chips (100) and said base plate (110) to transmit said light source and protect said sleeve (104), said wireless control module (102), said plurality of LED chips (100) and said base plate (110).

2. The LED bulb of claim 1, further comprising:
a cylindrical base (114) connected to an upper end of said threaded base portion (106) to protect said driving unit (108) and for insulation; and
a heat sink (116) connected to said cylindrical base (114) and said bulb shell (112) to dissipate heat and protect said driving unit (108).

3. The LED bulb of claim 2, wherein said cylindrical base (114) comprises an insulating material.

4. The LED bulb of claim 3, wherein said insulating material comprises plastic material.

5. The LED bulb of claim 2, wherein said heat sink (116) comprises a plurality of locking devices (118) to fix said bulb shell (112).

6. The LED bulb of claim 2, wherein said base plate (110) is fastened above said heat sink (116) through at least one fastening element (120).

7. The LED bulb of claim 2, wherein said cylindrical base (114) is fastened below and inside said heat sink (116) through at least one fastening element (120).

8. The LED bulb of claim 1, wherein material of said base plate (110) comprises an electrically conductive metal.

9. The LED bulb of claim 8, wherein said electrically conductive metal comprises aluminum alloy.

10. The LED bulb of claim 1, wherein said bulb shell (112) comprises a spherical shell.

11. The LED bulb of claim 1, wherein material of said bulb shell (112) comprises opaque material.

12. The LED bulb of claim 1, wherein material of said bulb shell (112) comprises transparent material.

13. A method for wirelessly controlling a light emitting diode (LED) bulb (10), said LED bulb (10) comprising a wireless control module (102) and a driving unit (108), said method **characterized by** comprising:
receiving a wireless control signal emitted from a wireless transmitter and controlling said driving unit (108) according to said wireless control signal by said wireless control module (102); and
adjusting ON/OFF status and brightness of said LED bulb (10) by said driving unit (108).
